# EUROPEAN PATENT SPECIFICATION

(11) **EP 2 310 686 B1**
(45) Date of publication and mention of the grant of the patent: **25.10.2017**
(21) Application number: 09785269.3
(22) Date of filing: 02.07.2009
(51) Int. Cl.: F04D 19/04, F04D 17/16, F04D 27/02, F04D 29/60

(54) **VACUUM PUMP**
VAKUUMPUMPE
POMPE À VIDE

(30) Priority: 04.08.2008 GB 0814116
(43) Date of publication of application: 20.04.2011
(73) Proprietor: Edwards Limited, Burgess Hill West Sussex RH15 9TW (GB)
(72) Inventor: DAVIDSON, Stewart, North Somerset BS21 6TH (GB)
(74) Representative: Norton, Ian Andrew
(86) International application number: PCT/GB2009/050779
(87) International publication number: WO 2010/015847

(56) References cited:
- EP-A- 1 398 506
- DE-A1-102007 048 703
- GB-A- 2 159 581
- JP-A- 2004 143 999
- US-A- 5 145 335
- US-A1- 2006 169 028
- US-A1- 2007 104 598
- US-B1- 6 412 173
- US-B1- 6 457 954

## Description

This invention relates to the protection of personnel and equipment from injury and damage caused by projectiles generated as the result of a vacuum pump failure.

Deposition steps of semiconductor wafer processing employ a variety of precursor gases. These gases are often used inefficiently in the process, and any unused precursors and process by-products are pumped away from the chamber by vacuum pumps.

As the precursors and process by-products are pumped away from the chamber they continue to react and/or deposit solids inside the vacuum system, in particular in the mechanical stages of vacuum pumps conveying the gases away from the chamber.

Deposition of solids within the pumping mechanism reduces the tolerance between the pump rotors and stator, which can cause the pump to seize while in operation or prevent it from restarting from cold, for example after it has been stopped for servicing.

The maintenance of a semiconductor process chamber or vacuum system is usually carried out with great care to prevent exposure of any sections of the vacuum system, which are not being serviced, to air and moisture from the atmosphere. It is, however, very difficult to entirely prevent such exposure.

Epitaxial processes use a mixture of chlorosilane precursors and hydrogen which are known to form potentially explosive deposits of polychlorosilane by-products in the pumping mechanism. At low pressure the process deposits do not pose a significant danger. However, on exposure to the atmosphere the deposits readily absorb oxygen which, in combination with the friction caused by the reduced tolerances in the pumping mechanism, can start an energetic reaction between the polymer and absorbed oxygen when the pump is restarted. The reaction may be of sufficient energy within the pump to cause it to explode generating projectiles of various sizes together with an instantaneous release of gas formed by the reaction.

Vacuum pumps are often housed in enclosures containing several pumps and gas abatement equipment. The enclosures, on models such as the Edwards Limited Zenith combined pumping and abatement system, are manufactured from stainless steel frames with thin gauge sheet metal doors to allow service personnel access to the vacuum system and abatement equipment inside. When closed, the doors enable the enclosure to be extracted by the house duct, which protects personnel in the event of a gas leak from the equipment within the enclosure. The thin gauge metal doors are usually sufficient to prevent any large projectiles generated during a vacuum pump explosion from being projected outside the enclosure. However the smaller projectiles are able to achieve higher velocities than large projectiles and are know to pass straight through the thin gauge metal doors, thus creating a potential source of injury or damage to either personnel or equipment in the vicinity.

One method of preventing the generation of projectiles is to avoid the build up of potentially explosive deposits within the vacuum pump. The continuous addition of gases such as oxygen or hydrochloric acid to the pump foreline during processing can cause a gradual reaction with the deposit within the pumping mechanism thus rendering it inert. However, many semiconductor wafer producers are reluctant to allow the addition of a reactive gas to the foreline due to concerns about the back-migration of the additive gases, which can affect the process chemistry in the process chamber.

Another safety measure employed against damage by projectiles is to use high gauge, thick, steel for the enclosure housing the vacuum pump, but this not only makes it difficult for personnel to open and remove the doors to service the equipment housed in the enclosure but it can it can also add a large capital cost to the equipment.

It is known from documents US20040076508 and JP2004143999 to intimately surround a pump with a projectile prevention device.

The present invention provides a vacuum pump surrounded by a ballistic blanket according to Claim 1.

By surrounding the vacuum pump by a ballistic blanket any projectiles generated by the pump exploding hit the blanket causing them to lose momentum and prevent them from injuring personnel or damaging neighbouring equipment. The ballistic blanket may be used to surround pumps employed to evacuate a variety of semiconductor process chambers producing potentially explosive solid by-products, for example Epitaxial process chambers.

The vacuum pump is housed in an enclosure. In this case, the use of a ballistic blanket can replace the need for thick gauge steel doors, thus reducing the capital cost of the equipment and increasing the ease with which the doors can be removed by service personnel to access the equipment within the enclosure. The location for the ballistic blanket is between the vacuum pump and the enclosure so that the enclosure can still be attached to an extract duct as a safety measure against possible dangerous gas leaks from any device within the enclosure.

The generation of projectiles by an exploding vacuum pump will be accompanied by an instantaneous release of gas which will be generated in the explosive reaction. Therefore, the ballistic blanket surrounding the pump comprises means for the release of gas from between the pump and ballistic blanket. The ability to release and prevent the build up of gas generated in the explosion prevents the possible deformation of the ballistic blanket, which would compromise the protection offered by the blanket.

The means for the release of gas preferably comprises a vent, such as an open duct, or chimney, protruding from one or more of the surfaces of the blanket surrounding the pump. The dimensions and position of the vent are preferably such that it allows the release of any gas generated whilst not compromising the protection offered by the blanket by leaving an open path for projectiles to bypass the blanket. The vent is advantageously positioned concentrically around the foreline, which enables the release of gas without limiting the protection offered by the blanket surrounding the pump.

It is advantageous to employ means for the release of gas comprising a pressure release mechanism that is configured to activate and release gas from between the vacuum pump and ballistic blanket only when the pressure of the gas between the vacuum pump and the ballistic blanket is above a certain threshold, namely atmospheric pressure. Preferably the mechanism is configured to subsequently de-activate when the pressure between the vacuum pump and the ballistic blanket is below or equal to atmospheric pressure.

The ballistic blanket surrounding the pump is advantageously comprised of separate panels. This enables service personnel to gain access to a particular area of equipment by removing individual panels whilst remaining protected from projectiles generated from other areas of the equipment not being serviced. Preferably the ballistic blanket surrounding the vacuum pump comprises six separate panels so that all sides of the pump are surrounded. Alternatively, the ballistic blanket surrounding the vacuum pump may comprise four separate panels, for example around each of the vertically extending sides of the pump with, the floor and thick gauge steel shelf, or the enclosure ceiling above the pump, providing protection against projectiles propelled in the direction above and/or below the vacuum pump.

The ballistic blanket is supported by the enclosure. The blanket can be supported by a variety of positions within the enclosure, for example from the ceiling, or the bottom of the shelf within the enclosure or on the doors to the enclosure. The blanket may also be supported by an additional frame within the enclosure.

Projectiles can be generated with velocities of between 10m/s and 120m/s. Those of greatest concern are those with a velocity of between 60m/s and 120m/s, therefore the ballistic blanket is preferably configured to prevent projectiles with a momentum of between 150 joules of energy and 450 joules of energy from passing therethrough. The ballistic blanket is therefore preferably at least N.I.J. (National institute of Justice, US) level *IIIA,* more preferably between N.I.J. level *IIA* and *IV.*

Preferred features of the present invention will now be described by way of example with reference to the accompanying drawings, in which:
Figure 1 illustrates one embodiment of a vacuum pump housed in an enclosure and surrounded by a ballistic blanket;
Figure 2a illustrates three adjoining panels of a ballistic blanket surrounding a pump prior to a vacuum pump explosion;
Figure 2b illustrates three adjoining panels of a ballistic blanket surrounding a pump activated to release the instantaneous build up of gas generated during a vacuum pump explosion.

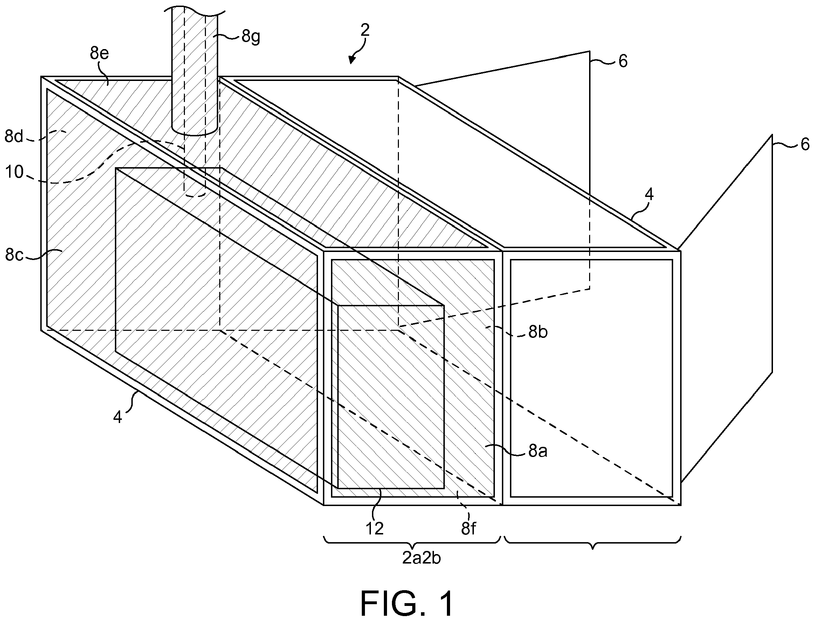

Figure 1 illustrates an enclosure 2 constructed from a metal frame 4. A vacuum pump 12 is housed in enclosure section 2a. The vacuum pump 12 is in fluid communication with a process chamber, for example an epitaxial chamber (not shown) via conduit 10. The vacuum pump is surrounded by a ballistic blanket 8 (a-f) supported by the enclosure 2 and positioned between the vacuum pump 12 and enclosure 2. The enclosure 2 also comprises enclosure doors 6.

For simplicity the illustrated enclosure 2 comprises two enclosure sections 2a, 2b. These enclosure sections 2a, 2b may each house a respective vacuum pump, or may house a vacuum pump 12 and an abatement device. However, the enclosure may comprise any number of enclosure sections for housing any number of pumps 12 or abatement devices, for example four vacuum pumps 12 and one abatement device. The metal frame 4 is preferably constructed from 3 mm think stainless steel. The conduit 10 may also be constructed from 3 mm thick stainless steel.

The enclosure doors 6 provide service personnel access to each side of the enclosure 2, and therefore any equipment therein, either by opening the doors 6 and/or completely removing them from the enclosure 2. In Figure 1 the enclosure doors 6 have been illustrated as removed from all sides of the enclosure 2 with the exception of the two enclosure doors 6 illustrated on enclosure section 2b. The enclosure doors 6 are preferably constructed from 2mm thick stainless steel and attached to the frame by open hinges which enable service personnel to open the doors 6 and to remove the doors 6 from the enclosure 2.

The enclosure 2 may be continually evacuated by attaching the enclosure 2 to an extractor duct (not shown). In normal operation, when the enclosure 2 is to be evacuated all of the enclosure doors 6 are attached to the enclosure 2 and closed. It is advantageous that the extract is sufficient that when an enclosure door 6 is opened and/or removed the face velocity of gas at the open side of the enclosure 2 from which the door 6 has been removed or opened is at least 0.2 m/s to ensure minor gas escapes from the enclosure are prevented.

Figure 1 further illustrates a ballistic blanket 8 surrounding the pump 12. The ballistic blanket may be constructed from any number of materials commonly used for ballistic blanket material such as Kevlar and Twaron. The ballistic blanket 8 is preferably at least N.I.J. level I. The ballistic blanket 8 comprises multiple layers of strong fiber webs which absorb and disperse the impact energy of projectiles impacting the blanket 8. Additional energy from projectiles is absorbed by each successive layer of the blanket until all the energy is removed and the projectiles eventually stop.

The ballistic blanket is preferably positioned between the vacuum pump 12 and enclosure 2. The blanket is preferably supported by the enclosure. The blanket panels 8a to 8f illustrated may be supported at each of the four corners or sides of the blanket, for example, by straps or resilient members, such as springs, attached to the enclosure 2 (not shown). The ballistic blanket panels 8a to 8f may also be supported by an additional frame (not shown), in addition to the enclosure frame 4.

The ballistic blanket preferably comprises of six panels 8a to 8f. The blanket also comprises a vent 8g concentrically surrounding the conduit 10. The vent 8g may be configured to concentrically surround the length of the conduit 10 from the process chamber (not shown) to the ballistic blanket 8 or, more preferably, it may be configured to concentrically surround the conduit 10 within the enclosure with sufficient space between the conduit 10 and vent 8g to discharge, into the enclosure, the instantaneous release of gas during a vacuum pump explosion whilst preventing the escape of projectiles.

Whilst in the illustrated example the ballistic blanket comprises six panels, the ballistic blanket may comprise any number of panels, for example four panels surrounding the pump with the enclosure floor (not shown) and enclosure ceiling (not shown) providing the remaining protection against projectiles generated in the vertical directions above or below the vacuum pump 12 as the result of a vacuum pump 12 explosion.

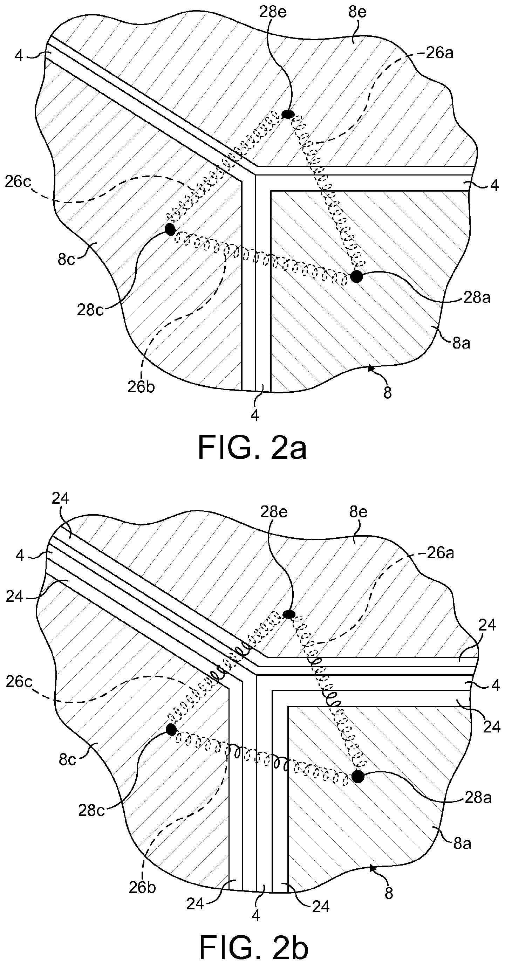

Figures 2a, 2b illustrate one embodiment of a pressure release mechanism for releasing gas from between the vacuum pump and the ballistic blanket.

Figures 2a, 2b illustrate three adjoining panels 8a, 8c, 8e of a ballistic blanket 8 surrounding a vacuum pump 12 (not shown). The panels 8a, 8c, 8e are supported between the vacuum pump and enclosure 2 by the enclosure frame 4 or by another frame (not shown) provided in addition to the enclosure frame 4.

Elastic members 26a, 26b, 26c, for example springs, are attached to and extended between the panels 8a, 8c, 8e. Elastic member 26a extends between panels 8a and 8e, elastic member 26b extends between panels 8a and 8c; and elastic member 26c extends between panel 8c and 8e. The elastic members 26a, 26b, 26c are attached to the panels 8a, 8c, 8e at the fixing positions 28a, 28c, 28e.

Figure 2a illustrates the configuration of ballistic blanket panels 8a, 8c, 8e surrounding the vacuum pump prior to a vacuum pump explosion. The adjoining panels 8a, 8c, 8e are configured to meet, under normal pump operating conditions, along the parallel edges of each adjoining panel.

Figure 2b illustrates the configuration in the event of a vacuum pump explosion. The instantaneous release of gas formed in the explosive reaction within the vacuum pump mechanism will cause the pressure between the vacuum pump 12 and blanket 8 to increase. The elastic members 26a, 26b, 26c are configured such that when the pressure between the vacuum pump 12 and blanket 8 rises above a threshold limit, namely atmospheric pressure, the members 26a, 26b, 26c extend to allow the panels 8a, 8c, 8e to move in an outward direction from the vacuum pump 12 allowing the gas between the vacuum pump 12 and blanket 8 to escape via the gaps 24 formed between the panels 8a, 8c, 8e. The elastic members are further configured, subsequent to the release of gas from between the vacuum pump 12 and blanket 8, to contract causing the panels 8a, 8c, 8e to move in an inward direction back to the original configuration illustrated in Figure 2a.

The elastic members 26a, 26b, 26c and panels 8a, 8c, 8e are configured to allow the controlled release of the gas formed in the explosive reaction whilst maintaining the protective configuration of the blanket 8 by retaining the shape of the panels surrounding the vacuum pump 12.

Figure 2a illustrates the configuration of panels 8a, 8c, 8e and elastic members 26a, 26b, 26c at one corner of the enclosure 2 as illustrated in Figure 1. The same configuration of ballistic blanket panels and elastic devices illustrated in Figure 2a would exist at each of the eight corners of the enclosure 2 illustrated in Figure 1.

The embodiment illustrated in Figure 2a is just one example of the pressure release mechanism according to the invention. Other examples are flaps, vents and pressure release valves.

## Claims

1. A vacuum pump (12) surrounded by a ballistic blanket (8a - 8f) comprising multiple layers of strong fiber webs which absorb and disperse the impact energy of projectiles impacting the blanket **characterized in that** the vacuum pump is housed in an enclosure (2) and wherein the ballistic blanket is located between the vacuum pump and the enclosure and is supported by the enclosure, and wherein the ballistic blanket surrounding the pump comprises a pressure release mechanism for releasing gas from between the pump and ballistic blanket configured to activate to release gas from between the vacuum pump and ballistic blanket when the pressure of the gas between the vacuum pump and the ballistic blanket is above atmospheric pressure.

2. A vacuum pump according to Claim 1, wherein the pressure release mechanism is configured to subsequently de-activate when the pressure between the vacuum pump and the ballistic blanket is below or equal to atmospheric pressure.

3. A vacuum pump according to any preceding claim, wherein the ballistic blanket is configured to prevent projectiles with a momentum of between - 150 joules of energy and 450 joules of energy from passing therethrough.

4. A vacuum pump according to any preceding claim, wherein the ballistic blanket surrounding the vacuum pump comprises separate panels.

5. A vacuum pump according to Claim 4, wherein the ballistic blanket surrounding the vacuum pump comprises at least four separate panels.

## Patentansprüche

1. Vakuumpumpe (12), die von einem ballistischen Mantel (8a - 8f) umgeben ist, umfassend mehrere Schichten starker Fasergewebe, welche die Aufschlagenergie von auf den Mantel aufschlagenden Projektilen absorbieren und verteilen, **dadurch gekennzeichnet, dass** die Vakuumpumpe in einem Gehäuse (2) untergebracht ist und der ballistische Mantel zwischen der Vakuumpumpe und dem Gehäuse angeordnet und von dem Gehäuse getragen ist, und wobei der die Pumpe umgebende ballistische Mantel einen Druckentlastungsmechanismus zum Freisetzen von Gas von zwischen der Pumpe und dem ballistischen Mantel aufweist, der dafür konfiguriert ist, das freizusetzende Gas aus zwischen der Vakuumpumpe und dem ballistischen Mantel zu aktivieren, wenn der Druck des Gases zwischen der Vakuumpumpe und dem ballistischen Mantel oberhalb atmosphärischen Drucks liegt.

2. Vakuumpumpe nach Anspruch 1, wobei der Druckentlastungsmechanismus dafür konfiguriert ist, sich nachfolgend zu deaktivieren, wenn der Druck zwischen der Vakuumpumpe und dem ballistischen Mantel unter oder gleich dem atmosphärischen Druck ist.

3. Vakuumpumpe nach irgendeinem vorhergehenden Anspruch, wobei der ballistische Mantel dafür konfiguriert ist, Projektile mit einem Moment zwischen 150 Joule Energie und 450 Joule Energie am Durchtritt zu hindern.

4. Vakuumpumpe nach irgendeinem vorhergehenden Anspruch, wobei der die Vakuumpumpe umgebende ballistische Mantel separate Platten aufweist.

5. Vakuumpumpe nach Anspruch 4, wobei der die Vakuumpumpe umgebende ballistische Mantel mindestens vier separate Platten aufweist.

## Revendications

1. Pompe à vide (12) entourée d'une couverture balistique (8a - 8f) comprenant de multiples couches de toiles de fibres résistantes qui absorbent et dispersent l'énergie des impacts de projectiles venant impacter la couverture **caractérisée en ce que** la pompe à vide est logée dans une enceinte (2) et dans laquelle la couverture balistique est située entre la pompe à vide et l'enceinte et est supportée par l'enceinte, et dans laquelle la couverture balistique entourant la pompe comprend un mécanisme de relâchement de pression pour libérer du gaz se trouvant entre la pompe et la couverture balistique configuré pour s'actionner pour libérer du gaz se trouvant entre la pompe à vide et la couverture balistique lorsque la pression du gaz se trouvant entre la pompe à vide et la couverture balistique est au-dessus de la pression atmosphérique.

2. Pompe à vide selon la revendication 1, dans laquelle le mécanisme de relâchement de pression est configuré pour ensuite se désactiver lorsque la pression entre la pompe à vide et la couverture balistique est inférieure ou égale à la pression atmosphérique.

3. Pompe à vide selon l'une quelconque des revendications précédentes, dans laquelle la couverture balistique est configurée pour empêcher le passage, à travers celle-ci, de projectiles avec une quantité de mouvement comprise entre 150 joules d'énergie et 450 joules d'énergie.

4. Pompe à vide selon l'une quelconque des revendications précédentes, dans laquelle la couverture balistique entourant la pompe à vide comprend des panneaux distincts.

5. Pompe à vide selon la revendication 4, dans laquelle la couverture balistique entourant la pompe à vide comprend au moins quatre panneaux distincts.
